Europäisches Patentamt

European Patent Office

Office européen des brevets

(19)

(11) Veröffentlichungsnummer: **0 009 210**
**B1**

(12) **EUROPÄISCHE PATENTSCHRIFT**

(45) Veröffentlichungstag der Patentschrift:
12.01.83

(51) Int. Cl.³: **C 23 C 7/00**

(21) Anmeldenummer: 79103425.9

(22) Anmeldetag: 13.09.79

(54) Spritzpulver für die Herstellung verschleissfester Beschichtungen auf den Laufflächen von Kolbenringen oder Dichtleisten.

(30) Priorität: 23.09.78 DE 2841552

(43) Veröffentlichungstag der Anmeldung:
02.04.80 Patentblatt 80/7

(45) Bekanntmachung des Hinweises auf die Patenterteilung:
12.01.83 Patentblatt 83/2

(84) Benannte Vertragsstaaten:
DE FR GB IT SE

(56) Entgegenhaltungen:
DE-A-1 446 207
DE-A-2 312 810
DE-B-1 264 903
DE-B-1 300 412
FR-A-2 130 209
FR-A-2 311 627
FR-E-90 386
GB-A-1 365 680
US-A-3 556 747
US-A-3 837 817
US-A-3 936 295

(73) Patentinhaber: GOETZE AG,
Bürgermeister-Schmidt-Strasse 17,
D-5093 Burscheid 1 (DE)

(72) Erfinder: Beyer, Horst, Dr.-Ing., Finkenweg 12,
D-5093 Burscheid 1 (DE)
Erfinder: Buran, Ulrich, Dipl.-Ing., Neuenhaus 26 a,
-5093 Burscheid 1 (DE)
Erfinder: Fischer, Manfred, Dr., Moltkestrasse 15 a,
D-5653 Leichlingen 1 (DE)
Erfinder: Keiderling, Georg, Dorfstrasse 5,
D-4320 Hattingen/Ruhr (DE)

## Spritzpulver für die Herstellung verschleissfester Beschichtungen auf den Laufflächen von Kolbenringen oder Dichtleisten

Die Erfindung betrifft ein Spritzpulver für die Herstellung verschleissfester, ausbruchsicherer und brandspursicherer Überzüge auf den Laufflächen von Kolbenringen oder Dichtleisten von Verbrennungskraftmaschinen, in einem thermischen Spritz- oder Auftragsschweissverfahren.

In der Praxis haben sich vor allem auf den Laufflächen von Kolbenringen neben galvanischen Hartchromschichten thermische Aufspritz- und Auftragsschweissschichten wegen ihrer hohen Verschleissfestigkeit hervorragend bewährt. Die thermischen Spritzschichten bestehen dabei bevorzugt aus Molybdän oder Molybdänlegierungen, und derartige Schichten haben dabei gegenüber den galvanischen Hartchromschichten vor allem eine erheblich verbesserte Brandspursicherheit.

Molybdän- und die Molybdänlegierungsschichten sind allerdings relativ spröde, so dass im motorischen Betrieb die Spritzschichtkanten relativ leicht ausbrechen. Zur Abhilfe werden daher ihre Kanten entweder abgeschrägt, oder es werden lediglich Nuten oder Ausnehmungen in den Laufflächen der Maschinenteile mit den Spritzwerkstoffen ausgefüllt. Kolbenringe, allerdings mit abgeschrägten Kanten, liegen nicht eng an den Gegenflächen an, so dass es in Verbrennungskraftmaschinen zu leistungsmindernden Abgasleckagen, wie vor allem dem sogenannten Blow-By, kommen kann. Kolbenringe mit Füllungen in Nuten oder Ausnehmungen besitzen zwar durch die bis auf die Laufflächen reichenden belassenen Stege aus dem Grundwerkstoff scharfe äussere Kanten, allerdings ist vor allem deren Verschleissfestigkeit und deren Brandspursicherheit gegenüber ganzflächig beschichteten Ringen herabgesetzt. Gleichzeitig kann es bei derartig gekammerten Ringen, insbesondere bei extrem hohen thermischen und mechanischen Belastungen, zu Rissbildungen in den Spritzschichten, vor allem im Bereich der Kammerstege, kommen. Soweit diese Risse, von der Lauffläche beginnend, in radialer Richtung zum Kammergrund verlaufen, stören sie den motorischen Betrieb im allgemeinen nicht. Bei weiteren Belastungen können sie sich jedoch, abknickend parallel zum Kammergrund, weiter ausbreiten, so dass ganze Schichtbereiche vom Grund gelöst werden und mit der Zeit ausbrechen. Derartige Ausbrüche führen dann, allerdings meist erst nach vielen Betriebsstunden, gegebenenfalls zum Versagen des Motors.

Ferner ist, wie aus einer Reihe von Patentschriften bekannt, versucht worden, das Molybdän mit speziellen Elementen zu legieren, und es wurden Schichtwerkstoffe auf der Basis anderer Metalle oder von Metallkeramik entwickelt.

Nach der GB-A-1 365 680 besteht beispielsweise ein derartiges Molybdänlegierungspulver aus Molybdän mit 3 bis 15% Aluminium und nach der DE-A 1 446 207 aus 65 Teilen Molybdän und 35

Teilen Aluminiumteilen mit einer Nickelumhüllung. Auf diese Weise wurden zwar die Verschleissfestigkeiten, die Festigkeiten sowie die Haftung der Schichten am Grundwerkstoff gesteigert, allerdings ist durch die bisher bekannten Zusammensetzungen das anstehende Problem noch nicht in idealer Weise gelöst. Sowohl Kantenausbrüche als auch Schichtausbrüche wurden bei derartigen Schichten, insbesondere bei extrem hohen Belastungen, immer wieder beobachtet.

Es ist daher die Aufgabe der vorliegenden Erfindung, eine Spritzpulverzusammensetzung zu finden, welche sich zur Herstellung verschleissfester Beschichtungen auf insbesondere den Laufflächen von Kolbenringen eignet. Die Beschichtungen sollen sich sowohl zur Herstellung von Kolbenringen in überspritzter Form mit scharfen Kanten als auch zur Herstellung von Kolbenringen in gekammerter Form eignen, welche auch bei hoher Belastung keine Schichtausbrüche zeigen. Gleichzeitig soll deren Verschleissfestigkeit und deren Brandspursicherheit den herkömmlichen Molybdänbeschichtungen entsprechen.

Erfindungsgemäss wird diese Aufgabe durch ein Spritzpulver gelöst, welches zu 60 bis 97 Gewichtsteilen aus einer Komponente A mit Molybdän als Hauptbestandteil besteht, dem 3 bis 40 Gewichtsteile der Komponente B mit dem Hauptbestandteil Aluminium zugemischt oder zulegiert sind.

Die Komponente A besteht dabei aus Molybdän als Hauptbestandteil mit bis zu 50% zugemischtem oder zulegiertem Kobalt, Chrom, Eisen, Kupfer und/oder Wolfram sowie gegebenenfalls 4 bis 50% Bor. Ferner kann das Molybdän- oder das Molybdänlegierungspulver Kohlenstoff bis zu 9%, Sauerstoff bis zu 8%, Stickstoff bis zu 0,5 und/oder Wasserstoff bis zu 0,5% in vorzugsweise gelöster Form enthalten. Zu diesem Zweck wird, wie an und für sich aus der DE-A-2 433 814 bekannt, geschmolzenes Molybdän beziehungsweise geschmolzene Molybdänlegierung in eine die entsprechenden Gase enthaltende Kammer gespritzt, so dass entsprechend dem eingestellten Gaspartialdruck die gewünschte Konzentration erreicht wird.

Die Komponente B besteht aus 50 bis 100% Aluminium als Hauptbestandteil mit bis zu 50% zugemischtem und/oder zulegiertem Magnesium, Kupfer, Zink und/oder Silizium, wobei die weiteren Bestandteile der Komponente B einzeln bis zu 25% in der Komponente B enthalten sind.

Zusätzlich können den Spritzpulvern aus den Komponenten A und B in den erfindungsgemässen Gewichtsverhältnissen Hartstoffe auf Basis von vor allem Karbiden, Nitriden, Oxiden und/oder Spinellen sowie gegebenenfalls intermetallische Verbindungen zugegeben werden. Auf diese Weise wird die Verschleissfestigkeit gesteigert, allerdings soll der Gesamtgehalt der Hartstoffe aus der Pulvermischung nicht über 25% liegen, damit keine Schichtversprödungen entstehen.

Mit den erfindungsgemässen Spritzpulvern wurden im Plasmaspritzverfahren Kolbenringe sowohl mit Beschichtungen mit scharfen Kanten als auch mit Kammerfüllungen hergestellt. In Motorversuchen auch unter extremen Belastungen wurden weder Kantenausbrüche noch Rissbildungen mit nachfolgenden Schichtausbrüchen festgestellt, während gleichzeitig die Schichten etwa gleich gute Brandspursicherheit und Verschleissfestigkeit wie herkömmliche Molybdänschichten aufwiesen. Durch die Erfindung ist es somit möglich, Kolbenringe sowohl mit scharfen Kanten als auch in gekammerter Form herzustellen, welche eine erheblich verbesserte Betriebssicherheit aufweisen.

Im Sinne der Erfindung sollen die erfindungsgemässen Spritzpulver auch zur Herstellung von Schichten im Flammspritz- und Auftragsschweissverfahren eingesetzt werden. Ferner soll sich die Erfindung auch auf verschleissfeste Schichten auf anderen, der Reibung ausgesetzten Maschinenteilen, wie vor allem auf Dichtleisten oder Ventilsitzringen von Verbrennungskraftmaschinen, beziehen.

Ferner können im Sinne der Erfindung die Pulver auch aus Agglomeraten oder einem Verbund aller oder eines Teiles der Bestandteile hergestellt sein.

In Motorversuchen erwiesen sich durch Plasmaspritzen hergestellte Schichten aus den folgenden Pulvermischungen der Komponenten A und B als besonders vorteilhaft:

Pulver 1

Hergestellt durch Mischen von 75 Gewichtsteilen der Komponente A mit 25 Gewichtsteilen der Komponente B.

Die Komponente A besteht aus einer Molybdänlegierung mit 33 Gewichtsprozent Chrom. Die Komponente B besteht aus einer Aluminiumlegierung mit 12% Silizium.

Pulver 2

Hergestellt durch Mischen von 60 Gewichtsteilen der Komponente A und 40 Gewichtsteilen der Komponente B.

Die Komponente A besteht aus einer Molybdänlegierung mit jeweils 20 Gewichtsprozent Chrom und Eisen sowie 9 Gewichtsprozent Kohlenstoff und 1% Sauerstoff in vorwiegend ungebundener und gelöster Form. Die Komponente B besteht aus einer Aluminiumlegierung mit 12% Silizium und 3% Magnesium.

Pulver 3

In diesem Fall werden dem Pulver A 22 Gewichtsteile Molybdänkarbid zugemischt.

## Patentansprüche

1. Spritzpulver, das Molybdän und Aluminium enthält, für die Herstellung verschleissfester, brandspursicherer und ausbruchsicherer Überzüge auf den Laufflächen von Kolbenringen oder Dichtleisten von Verbrennungskraftmaschinen, in einem thermischen Spritz- oder Auftragsschweissverfahren, dadurch gekennzeichnet, dass das Spritzpulver

a) zu 60 bis 97 Gewichtsprozent aus einer Komponente A mit dem Hauptbestandteil Molybdän und den in einer Menge bis zu 50 Gewichtsprozent zugemischten oder zulegierten weiteren Bestandteilen Kobalt, Chrom, Eisen, Kupfer und/oder Wolfram und

b) zu 3 bis 40 Gewichtsprozent aus einer Komponente B mit dem Hauptbestandteil Aluminium und den weiteren in einer Menge bis zu 50 Gewichtsprozent zugemischten oder zugelierten Bestandteilen Silizium, Kupfer, Zink und/oder Magnesium besteht, wobei die weiteren Bestandteile der Komponente B einzeln bis zu 25% in der Komponente B enthalten sind.

2. Spritzpulver nach Anspruch 1, dadurch abgeändert, dass die Komponente A zusätzlich 4 bis 50 Gewichtsprozent Bor zugemischt oder zulegiert enthält.

3. Spritzpulver nach einem der Ansprüche 1 bis 2, dadurch gekennzeichnet, dass das Molybdän die Elemente Kohlenstoff bis 9%, Sauerstoff bis 8%, Stickstoff bis 0,5% und/oder Wasserstoff bis 0,5% in vorwiegend gelöster Form enthält.

4. Spritzpulver nach einem der Ansprüche 1 bis 3, dadurch gekennzeichnet, dass die Komponente B aus einer Aluminiumlegierung mit 5 bis 25% Silizium besteht.

5. Spritzpulver nach einem der Ansprüche 1 bis 3, dadurch gekennzeichnet, dass die Komponente B aus einer Aluminiumlegierung mit 2 bis 10% Kupfer besteht.

6. Spritzpulver nach einem der Ansprüche 1 bis 5, dadurch abgeändert, dass dem Pulver zusätzlich bis zu 25 Gewichtsteile eines Harnstoffes, bezogen auf die Gesamtpulvermenge, zugemischt sind.

7. Spritzpulver nach Anspruch 6, dadurch abgeändert, dass die Hartstoffe Karbide, Nitride, Oxide und/oder intermetallische Verbindungen sind.

## Claims

1. A spray powder containing molybdenum and aluminum for the manufacture of coatings, which are resistant to wear, to burning traces and to outbreaks, on the bearing faces of piston rings or sealing strips in internal combustion engines using a thermal spray or deposition welding process in which the spray powder comprises

a) 60 to about 97 parts by weight of a first component A whose major constituent is molybdenum to which are mixed or alloyed in an amount of up to about 50% by weight cobalt, chromium, iron, copper and/or tungsten and

b) 3 to about 40 parts by weight of a second component B whose major constituent is aluminum to which are mixed or alloyed in an amount of up to about 50% by weight silicon, copper, zinc and/or magnesium, said remaining elements each comprising up to at least 25% by weight of the second component B.

2. Spray powder of claim 1 wherein said first component A comprises about 4 to about 50% by weight of boron, which has been mixed or alloyed.

3. Spray powder of one of the claims 1 and 2 wherein the molybdenum comprises at least one of the elements carbon in an amount up to 9% by weight, oxygen in an amount up to 8% by weight, nitrogen in an amount up to 0,5% by weight and hydrogen in an amount up to 0,5% by weight, wherein said elements are predominately in dissolved form.

4. Spray powder of one of the claims 1 to 3, wherein the second component B is an aluminum alloy comprising about 5 to about 25% silicon.

5. Spray powder of one of the claims 1 to 3, wherein the second component B is an aluminum alloy comprising about 2 to about 10% copper.

6. Spray powder of one of the claims 1 to 5, wherein the spray powder contains up to about 25% by weight of additional hard substances.

7. Spray powder of claim 6, wherein the hard substances are carbides, nitrides, oxides and/or intermetallic compounds.

**Revendications**

1. Poudre projetable contenant du molybdène et de l'aluminium pour la réalisation de revêtements résistant à l'usure, à l'arrachage et aux brûlures sur les surfaces portantes des segments de pistons et des bandes d'étanchéité des moteurs à combustion interne par un procédé thermique de projection ou de dépôt de matière fondue, caractérisé en ce que ladite poudre projetable se compose:
a) de 60 à 97 parties en poids d'un composant A, principalement constitué par du molybdène et par jusqu'à 50 parties en poids des composants secondaires mélangés ou alliés ci-après: cobalt, chrome, fer, cuivre et/ou tungstène; et
b) de 3 à 40 parties en poids d'un composant B, principalement constitué par de l'aluminium et par jusqu'à 50 parties en poids des constituants secondaires mélangés ou alliés ci-après: silicium, cuivre, zinc et/ou magnésium, lesdits constituants secondaires au composant B étant séparément contenus jusqu'à 25% dans ledit composant B.

2. Poudre projetable selon la Revendication 1, caractérisée en ce que le composant A contient en outre de 4 à 40 parties en poids de bore, mélangé ou allié.

3. Poudre projetable selon une quelconque des Revendications 1 ou 2, caractérisée en ce que le molybdène contient jusqu'à 9% de carbone, jusqu'à 8% d'oxygène, jusqu'à 0,5% d'azote et/ou jusqu'à 0,5% d'hydrogène, principalement sous forme dissoute.

4. Poudre projetable selon une quelconque des Revendications 1, 2 ou 3, caractérisée en ce que le composant B est constitué par un alliage d'aluminium contenant de 5 à 25% de silicium.

5. Poudre projetable selon une quelconque des Revendications 1, 2 ou 3, caractérisée en ce que le composant B est constitué par un alliage d'aluminium contenant de 2 à 10% de cuivre.

6. Poudre projetable selon une quelconque des Revendications 1, 2, 3, 4 ou 5, caractérisée par une variante consistant à mélanger à la poudre une matière dure dans la proportion de 25 parties en poids de la quantité totale de poudre.

7. Poudre projetable selon la Revendication 6, caractérisée par une variante selon laquelle les matières dures sont des carbures, des nitrures, des oxydes et/ou des composés intermétalliques.